# EUROPEAN PATENT SPECIFICATION

(11) **EP 2 947 603 B1**
(45) Date of publication and mention of the grant of the patent: **10.07.2019**
(21) Application number: 15168119.4
(22) Date of filing: 19.05.2015
(51) Int. Cl.: H04N 13/204, G06K 9/00, G06K 9/20

(54) **Optical safety monitoring with selective pixel array analysis**
Optische Sicherheitsüberwachung durch Analyse eines selektiven Pixelarrays
Surveillance optique de sécurité par analyse d'un réseau de pixels sélectives

(30) Priority: 19.05.2014 US 201462000483 P; 27.10.2014 US 201414525125
(43) Date of publication of application: 25.11.2015
(73) Proprietor: Rockwell Automation Technologies, Inc., Mayfield Heights, OH 44124 (US)
(72) Inventor: GALERA, Richard, Nashua, NH 03062 (US); BOWLBY, Anne, Lowell, MA 01852 (US); JONES, Derek W., Kirkcudbright, Dumfries & Galloway DG6 4SP (GB); PRADHAN, Nilesh, South Grafton, MA 01560 (US); LEARD, Francis L., Sudbury, MA 01776 (US)
(74) Representative: Grünecker Patent- und Rechtsanwälte PartG mbB

(56) References cited:
- EP-A2- 2 642 429
- EP-B1- 0 835 460
- US-A1- 2012 106 791
- US-A1- 2013 182 114
- DICKENS J S ET AL: "Pedestrian detection for underground mine vehicles using thermal images", AFRICON, 2011, IEEE, 13 September 2011 (2011-09-13), pages 1-6, XP031990097, DOI: 10.1109/AFRCON.2011.6072167 ISBN: 978-1-61284-992-8

## Description

### BACKGROUND

The subject matter disclosed herein relates generally to optical area monitoring, and, more particularly, to an imaging sensor capable of performing selective time-of-flight (TOF) analysis on specified portions of a pixel array.

EP 0 835 460 B1 discloses that various techniques are known for creating three-dimensional images of a scene, i.e., images that include depth or distance information. Exemplary methods include time-of-flight, phase detection and triangulation. These techniques generally require that the image be scanned, for example by a laser beam, and depth data acquired point by point. It is further disclosed that a camera acquires a three-dimensional image information from a distance window within a scene, wherein the center distance and the width of the window are adaptively controlled. An operator identifies at least one object of interest. Once the object of interest has been identified, the system controller acquires an initial range reading regarding the object. This initial range reading may be acquired by aiming a range finder known in the art, for example a laser range finder, at the object and receiving a range reading therefrom.

US 2012/0106791 A1 discloses an image processing apparatus such including: an object detecting unit which detects a plurality of moving objects from at least one of two or more images obtained by photographing a surveillance area from two or more view points, respectively; a depth determination unit which determines depths of the moving objects based on the two or more images, wherein the depth determination unit determines the moving objects as different objects if the moving objects have different depths.

EP 2642429 A2 discloses a multi-lens camera system including multiple camera units including respective optical filters and image sensors that acquire captured images via the optical filter, each of the optical filters having multiple filter regions whose optical characteristics differ respectively, and an image processor, operably connected to the multiple camera unit, to execute different types of image processing on the captured image to form an image that contains multiple image regions whose characteristics differ depending on the optical characteristics of the filter region in which they are acquired. In one embodiment using a color-filter image region, the CPU recognizes a traffic light and a traffic sign. Then, the CPU performs parallax calculation only for the result area where at least one of the traffic light and the traffic sign is recognized, using the color information detected in both the reference image and the comparison image.

It is the object of the present invention to provide an improved method and system for monitoring image data to detect the presence of human beings within a potentially hazardous area.

This object is solved by the subject matter of the independent claims.

Embodiments are defined by the dependent claims.

### BRIEF DESCRIPTION

The invention is summarized by the independent claim.

### BRIEF DESCRIPTION OF THE DRAWINGS

FIG. 1 is a schematic illustrating 2D detection of an object in the X and Y dimensions using a two-dimensional imaging sensor.
FIG. 2A is a schematic illustrating 2D image analysis of an image using a 2D image sensor.
FIG. 2B is a schematic illustrating 3D image analysis of an image using a 3D image sensor.
FIG. 3 is a block diagram of an example imaging sensor device.
FIG. 4 is a functional block diagram illustrating an overview of an imaging sensor device's operations.
FIG. 5 is a block diagram illustrating components of an imaging sensor device.
FIG. 6. is an illustration of example pixel array groupings.
FIG. 7 is a block diagram illustrating correlation of 2D (imaging) and 3D (distance) information by an imaging sensor device.
FIG. 8 is a block diagram of an example safety component that can be integrated in one or more embodiments of an imaging sensor device.
FIG. 9 is a schematic of an industrial safety monitoring system that utilizes an imaging sensor device.
FIG. 10 is an illustration of an example automotive safety application that employs an imaging sensor device.
FIG. 11 is a flowchart of an example methodology for performing selecting three-dimensional analysis on a pixel array by an imaging sensor device.
FIG. 12 is a flowchart of an example methodology for dynamically selecting a portion of a pixel array for selective 3D analysis.
FIG. 13 is an example computing environment.
FIG. 14 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

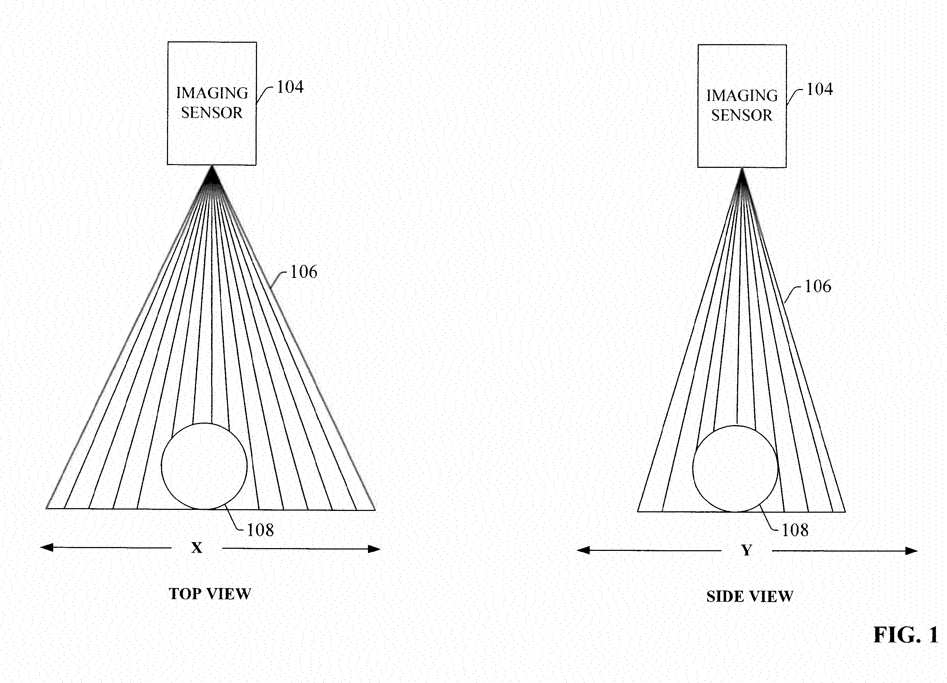

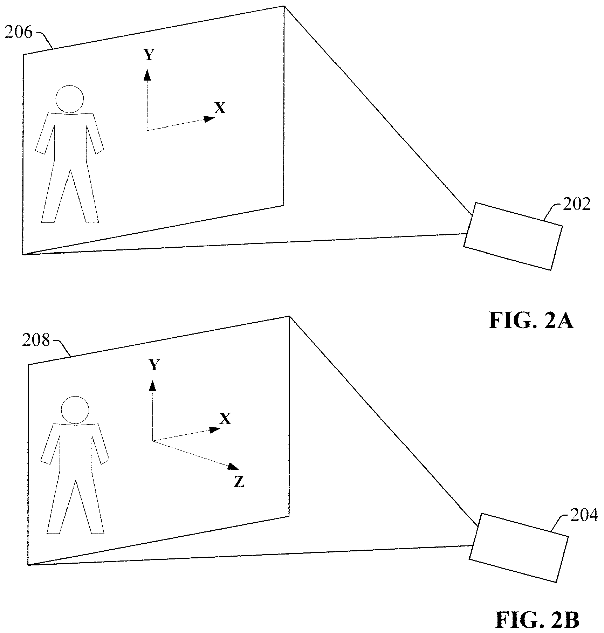

Two-dimensional (2D) imaging sensors are generally used to detect and identify shape and/or surface characteristics of objects within a viewing field of the sensor. FIG. 1 illustrates identification of an object using a 2D imaging sensor 104. Some types of 2D imaging sensors (e.g., imaging cameras) operate by projecting a wide, light beam 106 toward an area to be monitored and collecting the reflected light reflected from the surfaces and objects (e.g., object 108) within the viewing area at a receiver. Some sensors may sweep the light beam 106 across the viewing area in an oscillatory manner to collect line-wise image data, which is analyzed to identify object edges and surfaces, surface patterns, or other such information. Alternatively, the sensor 104 may project a stationary, substantially planar beam of light across an area of interest and collect data on objects that pass through the beam. In general, 2D image sensors perform grayscale or red-green-blue (RGB) analysis on the pixel data generated based on the reflected light to yield two-dimensional image data for the viewing field, which can be analyzed to identify object edges, object surface patterns or contours, or other such information. FIG. 2A is a schematic illustrating 2D image analysis of an image 206 using a 2D image sensor 202. 2D image analysis yields object and surface information in the x-y plane. Depending on the particular application in which the imaging sensor is being used, the sensor will generate suitable outputs based on the objects and/or patterns detected within the viewing area.

Three-dimensional (3D) image sensors, also known as time-of-flight (TOF) sensors, are designed to generate distance information as well as two-dimensional shape information for objects and surfaces within the sensor's viewing field. Some types of TOF sensors determine a distance of an object using phase shift monitoring techniques, whereby a beam of light is emitted to the viewing field, and the measured phase shift of light reflected from the object relative to the emitted light is translated to a distance value. Other types of TOF sensors that employ pulsed light illumination measure the elapsed time between emission of a light pulse to the viewing field and receipt of a reflected light pulse at the sensor's photo-receiver. Since this time-of-flight information is a function of the distance of the object or surface from the sensor, the sensor is able to leverage the TOF information to determine the distance of the object or surface point from the sensor. FIG. 2B a schematic illustrating 3D image analysis of an image 208 using a 3D image sensor 204. As shown in this figure, 3D analysis yields distance or depth information in the z-direction (that is, the distance of objects and surfaces from the sensor 204) as well as imaging information in the x-y plane.

Three-dimensional image analysis - which entails measurement of time-of-flight information and subsequent calculation of distance information - is generally more processing intensive than 2D image analysis. The additional processing time and power required for 3D analysis may render 3D image sensors unsuitable for certain types of applications that require fast, reliable response times. However, there are certain types of applications that could benefit from 3D image analysis, but which require fast and reliable decision-making and response times. For example, industrial safety monitoring applications must be able to reliably detect the presence of human beings within a potentially hazardous area, and to respond with appropriate safety control outputs (e.g., commands to stop or slow a running machine, to remove power from hazardous machinery, etc.) with minimal delay to prevent injury.

To address these and other issues, one or more embodiments of the present disclosure provide an imaging sensor capable of performing 3D image analysis on selected subsets or portions of the sensor's pixel array. In one or more embodiments, the imaging sensor allows one or more specified portions of the pixel array to be selected for 3D (time-of-flight) analysis in order to obtain distance information for pixels in that portion of the pixel array, while the remaining pixel array areas will be processed using 2D image analysis. For example, after the imaging sensor is trained on the area of interest, a user may select a horizontal stripe of pixels across a middle section (or an upper or lower edge) of the pixel array for 3D analysis, so that distance information as well as object identification information can be obtained and managed for the area corresponding to the selected stripe of pixels. The imaging sensor will apply 2D analysis (e.g., grayscale or RGB analysis) to the remaining, non-selected areas of the pixel array in order to detect, identify, classify, and/or correlate objects within the viewing area. Since 2D imaging processes more quickly than 3D processing, processing load is reduced and sensor response time is improved by limiting 3D analysis to only those areas of the scene for which distance information is required. The imaging sensor can also be configured to correlate results of the 2D and 3D analysis so that the identity, speed, distance, and trajectory of an object within the viewing space can be obtained with a high level of safety integrity.

In some embodiments, the imaging sensor may be configured to dynamically select or modify the portion of the pixel array to which 3D analysis is to be applied; e.g., based on detection of an object within the viewing area that satisfies one or more criteria. For example, during normal operation, the imaging sensor may be configured to perform continuous 2D analysis on the entire pixel array until an object or collection of objects having a certain defined classification (e.g., a person, a trolley, etc.) is detected. When such an object is detected - e.g., when a person enters the viewing area of the sensor - the sensor may define a portion of the pixel array corresponding to an area around the object for 3D analysis, so that TOF (distance) information for the object can be tracked. The imaging sensor may dynamically change this defined pixel area to move with object so that distance and speed information can be monitored for the object as long as the object remains within the viewing area.

In one or more embodiments, the imaging sensor may also be configured to, for a given image, identify non-contiguous groups of pixels that belong to a single object of a defined classification. This can allow the imaging sensor to identify the presence of a person within the viewing area even if the person is partially obscured within the image. For example, the imaging sensor may be trained to identify the presence of two separate visible objects corresponding to human legs, and to correlate these two objects within the image as belonging to a human being who is within the viewing area but partially obscured. The sensor can track these correlated objects as necessary (e.g., by performing 3D analysis on the pixel areas corresponding to the two objects) so that appropriate safety output or feedback information can be generated based on the location and speed of the person within the area.

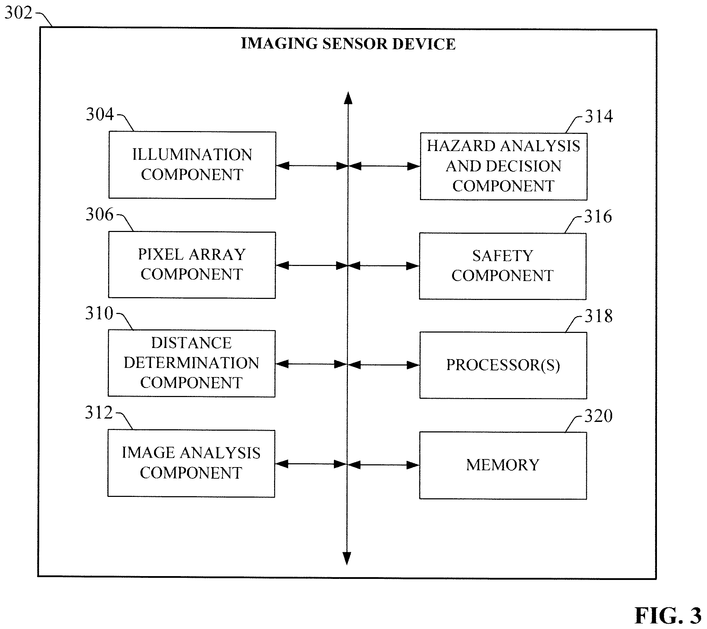

FIG. 3 is a block diagram of an example imaging sensor device 302 according to one or more embodiments of this disclosure. Although FIG. 3 depicts certain functional components as residing on imaging sensor device 302, it is to be appreciated that one or more of the functional components illustrated in FIG. 3 may reside on a separate device relative to imaging sensor device 302 in some embodiments. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

Imaging sensor device 302 can include an illumination component 304, a pixel array component 306, a distance determination component 310, an image analysis component 312, a hazard analysis and decision component 314, a safety component 316, one or more processors 318, and memory 320. In various embodiments, one or more of the illumination component 304, pixel array component 306, distance determination component 310, image analysis component 312, hazard analysis and decision component 314, safety component 316, the one or more processors 318, and memory 320 can be electrically and/or communicatively coupled to one another to perform one or more of the functions of the imaging sensor device 302. In some embodiments, components 304, 306, 310, 312, 314, and 316 can comprise software instructions stored on memory 320 and executed by processor(s) 318. Imaging sensor device 302 may also interact with other hardware and/or software components not depicted in FIG. 2. For example, processor(s) 318 may interact with one or more external user interface devices, such as a keyboard, a mouse, a display monitor, a touchscreen, or other such interface devices. Imaging sensor device 302 may also include network communication components and associated networking ports for sending data generated by any of components 304, 306, 310, 312, 314, and 316 over a network (either or both of a standard data network or a safety network), or over a backplane.

Illumination component 304 can be configured to control emission of light by the sensor device. Imaging sensor device 302 may comprise a laser or light emitting diode (LED) light source under the control of illumination component 304. In some embodiments, illumination component 304 may generate pulsed light emissions directed to the viewing field, so that time-of-flight information for the reflected light pulses can be generated by the sensor device. The pixel array component 306 can be configured to process and analyze a pixel array corresponding to an image of the viewing field monitored by the sensor device. For example, the pixel array component 306 may control which subset of pixels will be processed using 3D analysis. The subset of pixels to which 3D analysis is to be applied may be fixed (e.g., preconfigured via user input); alternatively, the pixel array component 306 may select the subset of pixels for 3D analysis dynamically according to one or more defined criteria (e.g., human or facial recognition, object classification, etc.).

Distance determination component 310 can be configured to derive distance information by performing 3D analysis on all or selected portions of the pixel array data. Any suitable analysis technique can be implemented by distance determination component, including but not limited to phase shift monitoring or pulsed time of flight analysis.

The image analysis component 312 can be configured to perform 2D analysis on portions of the pixel array that have not been selected for 3D analysis. The hazard analysis and decision component 314 can be configured to analyze and control one or more sensor outputs based on results generated by the pixel array component 306, distance determination component 310, image analysis component 312, and the safety component 316. This can include, for example, sending a control signal to a control or supervisory device (e.g., an industrial controller, an on-board computer mounted in a mobile vehicle, etc.) to perform a control action, initiating a safety action (e.g., removing power from a hazardous machine, switching an industrial system to a safe operating mode, etc.), sending a feedback message to one or more plant personnel via a human-machine interface (HMI) or a personal mobile device, sending data over a safety network, or other such output. Safety component 316 can be configured to implement one or more safety and/or redundancy features within the imaging sensor device 302 to render the sensor device suitable for use in safety applications (e.g., industrial safety applications designed to monitor a hazardous area and reliably perform automated control actions to mitigate risk of injury in response to detection of a potentially unsafe human presence or action, automobile safety applications in which one or more imaging sensors mounted on a vehicle control breaking of the vehicle based on detected risk conditions, etc.). By implementing such safety and redundancy functions, the imaging sensor device 302 can monitor a two-dimensional plane and a three-dimensional volume and respond to detected conditions with a high safety integrity level (e.g., SIL or ASIL), making the sensor device suitable for use in some safety application as an alternative to light curtains or other such sensors.

The one or more processors 318 can perform one or more of the functions described herein with reference to the systems and/or methods disclosed. Memory 320 can be a computer-readable storage medium storing computer-executable instructions and/or information for performing the functions described herein with reference to the systems and/or methods disclosed.

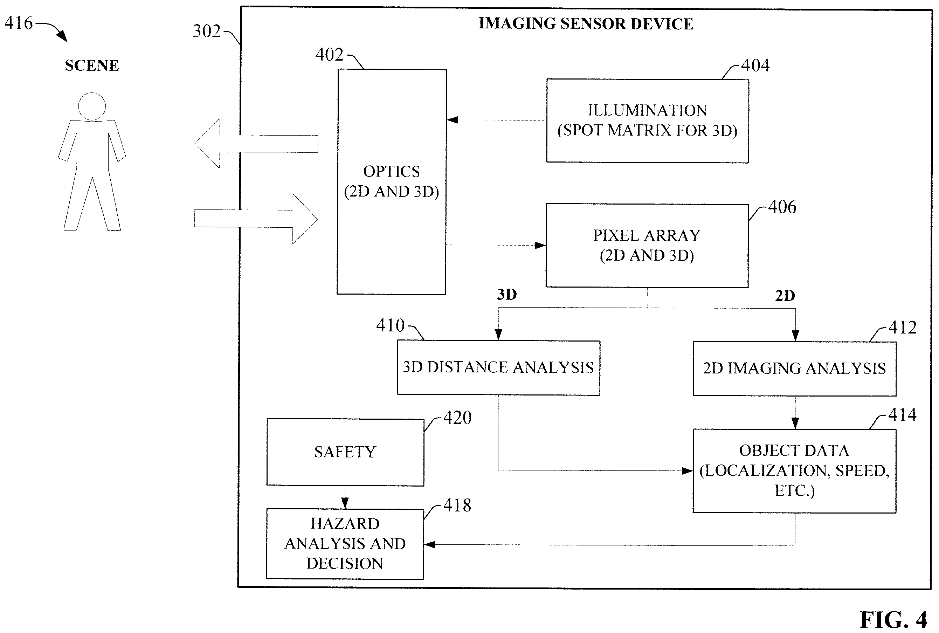

FIG. 4 is a functional block diagram illustrating an overview of the imaging sensor device's operations. Optics block 402 includes the light emitter (e.g., a laser, LED, or remote phosphor emitter) for projecting a light beam to the monitored scene 416 and an array of photo-receivers for receiving reflected light pulses from objects and surfaces within the scene. Illumination block 404 controls the projection of light by the LED, laser, or remote phosphor laser light source. In some embodiments, the illumination block 404 may project a beam of light or light pulses to achieve a uniform illumination across the scene 416. Alternatively, the illumination block may implement patterned illumination for 3D analysis, whereby light is concentrated in spots that are spaced across the scene 416 to ensure detection of objects of a given minimum size. This illumination technique can ensure accurate object detection at increased distances without increasing the power of the light source. Alternatively, the illumination block 404 may project light to achieve a uniform illumination across the scene 416.

Upon receipt of reflected light at the photo-receivers of the imaging sensor device 302, pixel data is generated based on the light intensity measured at each photo-receiver, and pixel array block 406 performs processing on the resulting pixel array data comprising the image. This can include, for example, identifying a first subset of pixels in the array on which 3D processing is to be performed, and designating a remaining second subset of pixels for 2D imaging analysis. Subsequent processing of each pixel depends upon the type of analysis (2D or 3D) to be performed on that pixel.

For a pixel selected for 3D (distance or depth) analysis, 3D distance analysis 410 determines a distance of an object or surface in the viewing field corresponding to the pixel, e.g., using phase shift time-of-flight analysis on a light beam reflected by the object, or using pulsed time-of-flight analysis on a light pulse reflected from the object. Performing distance calculations for each pixel of the 3D analysis portion(s) of the pixel array yields a 3D point cloud for the selected areas of the viewing field.

2D imaging block 412 performs 2D image analysis on the portion(s) of the pixel array for which 3D analysis is not performed. 2D image analysis can comprise RGB or grayscale analysis of the image portions corresponding to the non-3D pixels, including but not limited to edge detection, contour analysis, image sharpening, contrast adjustment, difference and additive imaging, etc. The imaging sensor device 302 can employ 2D image analysis to identify objects within the viewing area and determine whether the identified objects correspond to one or more defined object classifications (e.g., a human being, a forklift or trolley, a machined part on a conveyor, a pallet containing packaged products, etc.). In some embodiments, the imaging sensor device 302 may also be configured to perform facial recognition using 2D image analysis, which is useful for applications in which a control decision or operator feedback output is dependent upon an identity of the person detected within the viewing field.

Imaging sensor device 302 can correlate results of the 2D and 3D analysis to yield object data at object data block 414. Object data can include, for example, a location, speed, an acceleration and/or trajectory of an identified object within the three-dimensional viewing space. Depending on the type of application, a hazard analysis and decision block 418 can generate suitable outputs or operator feedback based on the correlated object data. In some embodiments, imaging sensor device 302 can interface with an industrial control or safety system, a vehicle safety system, or other such system to implement control features based on object detection. Accordingly, outputs generated by the sensor device can include control instructions to an associated control or safety system (e.g., a programmable logic controller or other safety automation controller, an engine control unit of a mobile vehicle, etc.) to alter operation of a machine or system based on the object data, safety outputs to an associated safety system (e.g., a safety relay) that place an industrial system in a safe state based on the presence and movements of a human being within the viewing field, or other such outputs. Imaging sensor device can also include a safety block 420 that monitors and diagnoses internal components and faults of the sensor device, including but not limited to power monitoring, vibration monitoring, and temperature monitoring. Accordingly, control outputs and messages generated by the hazard analysis and decision block 418 can additionally be a function of the diagnosis results generated by the safety block 420.

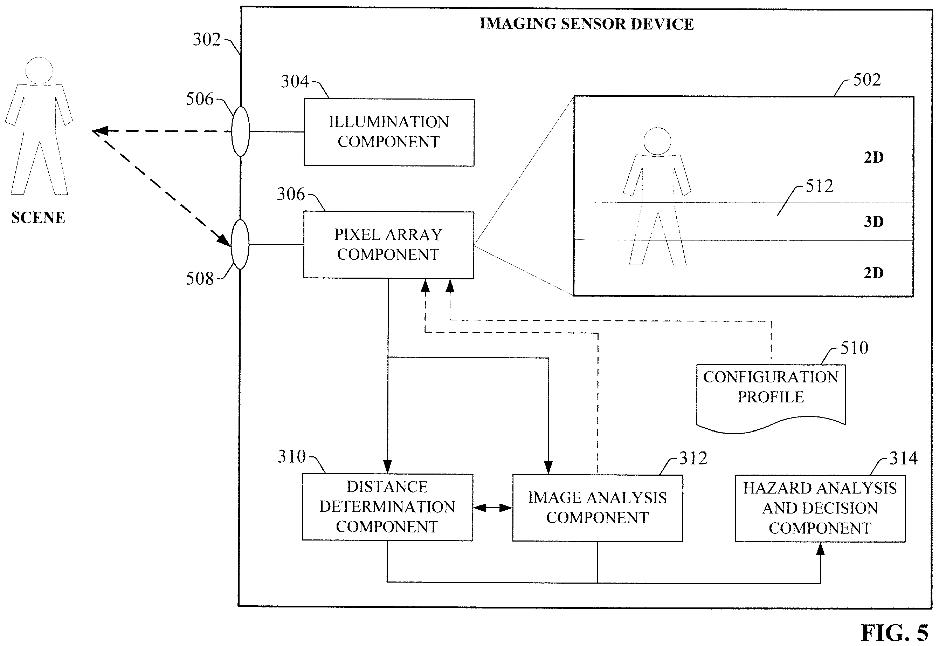

FIG. 5 is a block diagram illustrating components of imaging sensor device 302 according to one or more embodiments. In this example, illumination component 304 controls emission of LED, laser, or remote phosphor light to the viewing field via emitter 506. In some embodiments, illumination component 304 can project a wide, substantially planar beam of pulsed LED illumination to the viewing field. For scanning type devices, illumination component 304 can sweep this planar beam over an angular range across the viewing area in an oscillatory manner to facilitate collection of image data over the entire viewing range. In other embodiments, the beam may remain static (trained in a fixed direction) so that objects can be detected and identified as they pass through the plane of the beam. In yet another example, illumination component 304 may project a wide beam of light pulses over the viewing field (e.g., a cone-shaped beam).

In some embodiments, illumination component 304 may uniformly illuminate the viewing field using a laser, LED, or remote phosphor light source. Alternatively, some embodiments of illumination component 304 may employ a patterned illumination technique whereby, rather than uniformly illuminating the viewing area, the illumination component 304 concentrates light in spots spaced with a certain distance over the viewing area. This technique can improve reliability of detection of small objects and of objects with low reflectivity. In such embodiments, the size of each spot of light can be defined based on the effective size of the pixels and the optical characteristics of the receiving element 508 of the sensor device. The receiving element 508 is sized relative to the spot size such that the image of a spot on the receiving element 508 covers at least the light sensitive area of one pixel. In a variation of this technique, the illumination component 304 or the lens design can also be configured to modulate the illumination intensity of the emitted spots, such that high brightness spots and low brightness spots are interlaced across the viewing area simultaneously. This technique can facilitate reliable detection of bright and dark objects within a single image frame. In an example implementation, the focused spots of illumination can be achieved by placing a squared lenslet comprising square or rectangular apertures in front of the LED, laser, or remote phosphor light source. The locations of the apertures on the lenslet define the spot pattern. To ensure accurate detection with small object sizes, the spot pattern can be defined such that at least two horizontal spots and two vertical spots cover the minimum size of object at the given distance from the lens element 508.

Lens element 508 receives light reflected from the viewing field, and pixel array component 306 performs processing on the pixels of the resulting image data. As noted above, imaging sensor device 302 allows portions of the resulting pixel array 502 to be selected for 3D (distance or depth) processing and analysis, while the remaining portions of the pixel array are processed using 2D (imaging) analysis. In the example depicted in FIG. 5, a horizontal band 512 across a middle section of the pixel array 502 has been selected for 3D analysis, while the remaining portions of the pixel array 502 above and below the selected band 512 will be processed using 2D analysis. In some embodiments, pixel array component 306 identifies and groups the pixels into 2D and 3D sections based on a predefined configuration profile 510 specifying one or more areas of the pixel array 502 for which 3D analysis is to be performed. Alternatively, pixel array component 306 may be configured to dynamically select the areas of the pixel array on which 3D analysis is to be performed, as will be described in more detail below.

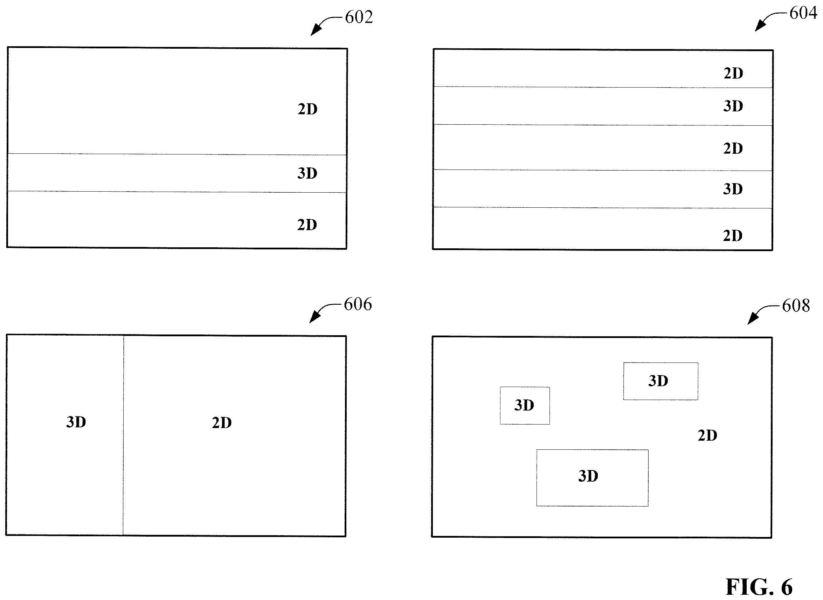

Although FIG. 5 depicts the area of 3D processing as a single horizontal band across the middle of the pixel array, it is to be appreciated that substantially any manner of pixel grouping can be managed by pixel array component 306. FIG. 6 illustrates other example pixel groupings. In addition to the single horizontal band depicted in pixel array 602, pixels may also be grouped into multiple 3D bands (either horizontal or vertical), as shown in example pixel array 604. Pixel array 606 depicts a split-screen type of pixel grouping, in which a left-side portion of the pixel array is selected for 3D analysis, while 2D analysis is performed on the right-side portion. Pixels may also be grouped into non-contiguous pixel clusters of various sizes, as shown in example pixel array 608.

In an example scenario wherein the imaging sensor device 302 is used to monitor an area of an industrial facility, it may be known that certain areas of the viewing field correspond to potentially hazardous zones, while other areas of the viewing field correspond to safe zones that pose little or no risk to operators. Accordingly, a system designer may define a section of the pixel array that encompasses the known hazardous areas for 3D analysis. These pixel area definitions can be stored in configuration profile 510 and leveraged by pixel array component 306 to group pixels of the pixel array accordingly for group analysis. Portions of the pixel array 502 that are not selected for 3D analysis will be processed using 2D analysis, which is less computationally intensive than 3D analysis. By limiting 3D analysis to crucial subsets of the pixel array 502 and performing 2D analysis on the remaining portions of the array, overall processing time can be reduced relative to performing 3D analysis on the entire image.

In another example, a ceiling-mounted imaging sensor may be oriented to face downward with the line of site substantially perpendicular to the floor, in order to monitor traffic through an entrance gate to a room or zone of interest. In this example, it may only be necessary to perform 3D analysis on a middle band of the pixel array corresponding to the pathway to the entrance gate. Accordingly, a system designer can define this area of the pixel array 502 and save these settings in the configuration profile 510.

Imaging sensor device 302 can support any suitable technique for allowing a user to define 3D zones on the pixel array 502. For example, an interface application executable on a personal computing device (e.g., tablet computer, laptop computer, desktop computer, mobile phone, etc.) may be used to facilitate data exchange between the computing device and the imaging sensor device 302. The interface application can generate and render configuration display screens capable of receiving input data from a user that set configuration parameters and definitions for the sensor. One or more configuration display screens may allow a user to define the areas of 3D analysis by entering x-y coordinates that define the sections of the pixel array 502 for which 3D analysis is to be performed. Alternatively, the configuration display screens may allow the user to draw (using a mouse or stylus) boundary lines (either linear or curved) that define the areas of 3D analysis. If the imaging sensor device 302 has been trained on the viewing area, the configuration screens can display a live image or a screenshot of the viewing area and allow the user to draw the 3D analysis boundary lines as an overlay on the image or screenshot.

Upon receipt of live pixel array data, and after the pixel array component 306 has grouped the pixels into respective 3D and 2D zones, image analysis component 312 performs 2D imaging analysis on those portions of pixel array 502 that were not designated by pixel array component 306 for 3D analysis. As noted above, imaging sensor device 302 can employ 2D imaging analysis to identify and classify objects within the image frame. Classification of objects can be based on pre-defined classes of objects that the imaging sensor device 302 has been trained to identify, including but not limited to human beings, particular types of vehicles (e.g., forklifts, trolleys, etc.), a manufactured part, a pallet, or other such object classifications.

In some embodiments, one or both of the pixel array component 306 or the image analysis component 312 can be configured to recognize instances in which two or more non-contiguous groups of pixels of the pixel array 502 belong to a common object or person that may be partially obscured within the image. In an example scenario, an operator may enter the image frame, but may be partially obscured by another object within the frame such that only portions of the operator's legs or feet are directly visible to the sensor device. The pixels of the pixel array 502 corresponding to the operator's left and right legs or feet may comprise separate, non-contiguous pixel groups, since the operator is obscured above the knees. The image analysis component 312 may be trained recognize lower-body human features, and therefore recognizes that two separate detected objects identified as human legs which are oriented a certain way with respect to one another within the frame belong to a common person, and are indicative of a human presence within the image. Accordingly, image analysis component 312 can identify and classify the two objects as human legs, and instruct the pixel array component 306 to associate the two detected objects for collective analysis under the assumption that the two objects correspond to a human being.

Concurrently or in coordination with the 2D image analysis, distance determination component 310 can perform 3D analysis on the pixels comprising the defined 3D portion of the pixel array 502 to determine a distance value associated with each of those pixels. The distance value represents the distance of the object or surface corresponding to the pixel from the sensor device. The analysis technique employed by the distance determination component 310 depends on the type of illumination and 3D analysis supported by the device. For example, for imaging sensor devices that employ phase shift analysis, the distance determination component 310 can monitor the phase shift of a reflected light beam received at a photo-receiver and compare this phase shift with the phase of the light beam emitted by the illumination component 304. The distance is then determined as a function of the relative phase shift between the emitted and received light. Other types of imaging sensor that employ pulsed light illumination measure the time duration between emission of a light pulse by the illumination component and receipt of a reflected light pulse at the photo-receiver for each pixel, and determining the distance as a function of this duration. In such embodiments, the distance determination component 310 may monitor the electrical output of the photo-receiver (which is a function of the intensity of light incident on the surface of the photo-receiver) and generate a waveform representing the reflected light pulse. The front edge of the returned light pulse can then be identified based on analysis of the waveform data, which represents the time at which the light pulse was received at the lens element 508. The distance determination component 310 can then compare this time with the time at which the emitted light pulse was sent by the illumination component 304. The difference between the two times represents the time-of-flight for the pulse, from which the distance information for the pixel corresponding to the photo-receiver can be derived. By performing waveform reconstruction and distance determination for each pixel in the 3D analysis portions of the pixel array 502, a 3D point cloud can be derived for the selected areas of the pixel array 502.

Some embodiments of imaging sensor device 302 may support dynamic definition of 3D analysis zones based on object detection and classification by the 2D image analysis component. For example, during normal operation the imaging sensor device 302 may perform 2D analysis on the entire pixel array 502 until an object of a specified classification is detected within the viewing field. In response to detection of such an object (e.g., a person, a vehicle, etc.) within the viewing field, the image analysis component 312 may provide information to pixel array component 306 identifying the object and its location within the pixel array 502. Pixel array component 306 can then define one or more pixel groups corresponding to the identified object, and instruct distance determination component 310 to begin performing 3D analysis on those groups of pixels, so that both the location and distance of the object can be tracked. In some embodiments, the pixel array component 306 and image analysis component 312 can operate in conjunction to move the defined 3D analysis portion of the pixel array 502 to track with the detected object as long as the object remains within the frame. Thus, embodiments of the imaging sensor device 302 can use 2D imaging analysis to recognize objects of interest within the frame, and instruct pixel array component 306 where 3D analysis should be performed. In this way, the imaging sensor device 302 can continuously collect TOF information for objects of interest while substantially minimizing the areas of the pixel array 502 on which 3D analysis is performed, optimizing processing and response times.

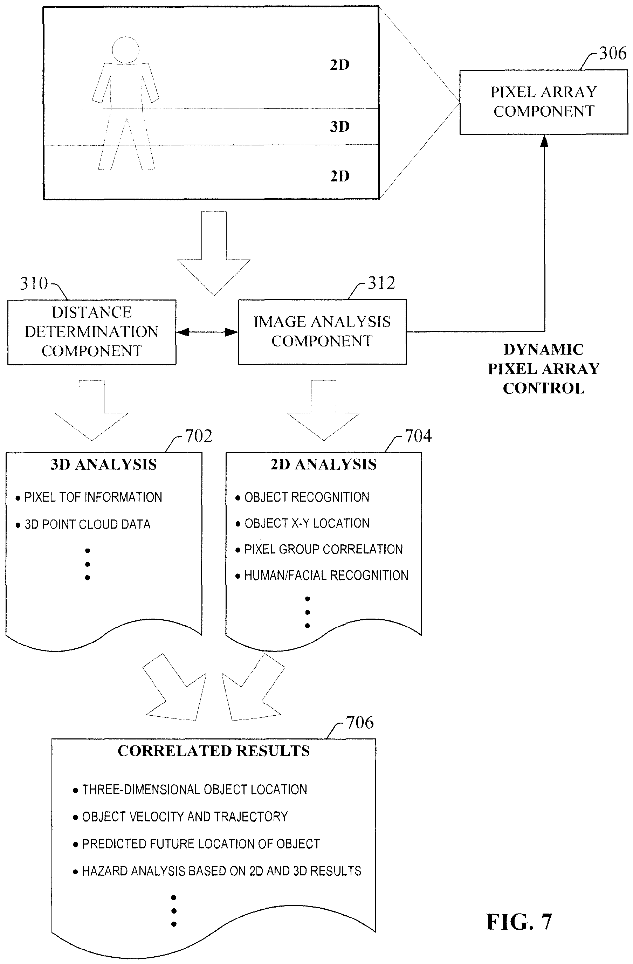

The imaging sensor device 302 can correlate results of the 2D and 3D analyses and determine suitable control or messaging outputs based on object classification, location, velocity, and/or trajectory. FIG. 7 illustrates correlation of 2D (imaging) and 3D (distance) information by the imaging sensor device. As described above, image analysis component 312 can generate 2D analysis results 704, including but not limited to object recognition or classification, x-y location of objects, correlation of pixel groups determined to belong to a common object, human and/or facial recognition based on image analysis, and other such data. Distance determination component 310 generates 3D analysis results 702 (time-of-flight distance information) for each pixel, yielding a 3D point cloud for areas of interest (areas of the pixel array specified for selective 3D analysis, either manually by a system designer or dynamically by the sensor based on information provided by image analysis component 312, as described in previous examples). The imaging sensor can correlate all or selected portions of these data sets to yield correlated results 706. These correlated results can include, but are not limited to, object location, velocity, and trajectory within the three-dimensional space; a predicted future location of an object of interest based on the three-dimensional location, velocity, and trajectory; or other such information.

In a non-limiting example of 2D and 3D result correlation, image analysis component 312 may identify objects within the image frame that correspond to a class of objects for which 3D analysis is required. In response, the imaging sensor device can apply 3D analysis to the region of the pixel array 502 corresponding to the detected object to obtain distance information for the object over time, while 2D analysis can track the x-y location of the object within the frame. By correlating these results, the object's instantaneous position, velocity, acceleration, and trajectory within the three-dimensional viewing space can be determined. For embodiments in which the imaging sensor device supports prediction of future object position, the sensor may also determine whether the object is predicted to be within a particular subspace of the three-dimensional viewing field based on the current location, speed, and trajectory, and generate a control or feedback output based on risk analysis using this prediction.

In another example, the imaging sensor device may coordinate object classification and edge detection (2D analysis results) with depth analysis (a 3D analysis result) in order to obtain depth information for all pixels enclosed within the edges of an identified object. For example, when an object enters the viewing field, the imaging sensor may leverage 2D imaging analysis to identify and classify the object as corresponding to a defined object class requiring 3D analysis. The 2D analysis may further include edge detection, which identifies the visible edges or boundaries of the object. The imaging sensor can then perform selective 3D analysis on all pixels within the object boundaries identified via 2D analysis.

Returning now to FIG. 4, based on the particular application being executed by the sensor device, hazard analysis and decision component 314 can be instructed to generate a suitable control, safety, or feedback output when the object classification, position, speed, acceleration, and/or trajectory satisfy a defined criterion. In some embodiments, hazard analysis and decision component 314 may interface with a control device (e.g., an industrial controller, a safety relay, an on-board computer for a motor vehicle, etc.) over a hardwired or networked connection, and issue control instructions to the control device based on identity, position, and behavior of objects observed in the viewing field. In an example scenario, based on correlation of analysis results generated by the distance determination component 310 and the image analysis component 312, the imaging sensor device 302 may identify that a plant employee has entered the viewing field, and that the employee's current location, speed, acceleration, and trajectory may place the employee within a potentially hazardous area near a controlled industrial machine. In response, the hazard analysis and decision component 314 is instructed to issue a command to the industrial controller to place the machine in a safe mode (e.g., by placing the machine in an idle mode or a slowed operation mode, or by instructing a safety relay to remove power from certain movable components of the machine). In another example scenario, the hazard analysis and decision component 314 may be configured to generate feedback information to be rendered on a display device based on object identification and behavior. This can include, for example, customized warning messages recommending that a user follow an alternate path or relocate to a safe area within the monitoring area. For embodiments of the imaging sensor device 302 that support facial recognition, feedback messages generated by hazard analysis and decision component 314 may also be further customized based on an identity of the employee detected within the viewing field. Hazard analysis and decision component 314 may interface with a display device mounted within the monitored area, or may be targeted to a personal device associated with the identified employee.

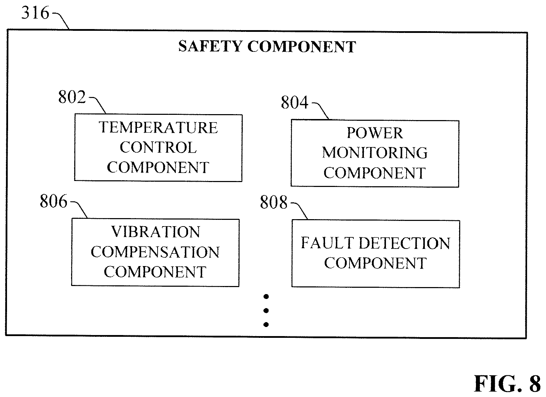

The object detection and tracking features described above, together with the reduced processing load and commensurate improvement in decision-making and response time that results from minimizing the amount of 3D processing required, render the imaging sensor devices described herein suitable for safety applications, which require a high degree of safety integrity and fast response times in order to mitigate risk of injuries. To ensure safety integrity of the imaging sensor device, one or more embodiments may include a safety component 316 that implements one or more features for ensuring reliability and accuracy of the sensor in a range of operating conditions, improving the safety integrity of the sensor device. In general, safety component 316 is configured to perform fault monitoring and diagnostic analysis on a range of conditions that may impact the integrity of the sensor operation, and trigger actions designed to mitigate hazards that may arise when a monitored deviates from a safe state (e.g., instruct the hazard analysis and decision component 314 to switch a machine to a safe state, output a warning message, etc.) FIG. 8 illustrates an example safety component 316 that can be integrated in one or more embodiments of imaging sensor device 302. Safety component 316 can comprise one or more sub-components that perform various types of diagnostics and fault monitoring. FIG. 8 illustrates an example safety component that includes functionality for monitoring and compensating for temperature, power, vibration, and internal component faults. However, it is to be appreciated that other types of fault monitoring and diagnostic capabilities may be supported by various embodiments of safety component 316, and are within the scope of this disclosure.

Temperatures within the sensor device may have an impact on the distance values generated by the sensor components. Accordingly, safety component 316 can include a temperature control component 802 configured to adjust the distance values generated by distance determination component 310 to compensate for measured deviations in temperature. Some embodiments of temperature control component 802 can also include mechanisms to regulate the sensor's internal temperature to maintain a specified optimal operating temperature, as well as redundant fault detection mechanisms to ensure that the temperature compensation meets or exceeds a defined minimum safety integrity level (e.g. SIL 2, SIL 3, ASIL C, ASIL D, etc.).

Safety component 316 can also include a power monitoring component 804 configured to monitor the internal rails that provide power to crucial components, and perform compensation actions in response to detected voltage deviations from rated tolerances. In this regard, some embodiments of imaging sensor device 302 may include a redundant power supply to ensure that a failure of the main supply does not prevent continued operation of the sensor device. Vibration compensation component 806 can be configured to perform appropriate compensation actions in response to monitored vibrations induced on the sensor.

Fault detection component 808 can be configured to monitor and diagnose internal sensor faults, and to generate information or instructions to the hazard analysis and decision component 314 based on the fault information. Also, to further comply with safety integrity level requirements, processor(s) 318 can be specified as a SIL- or ASIL-rated processor to ensure that the imaging sensor conforms to required safety standards.

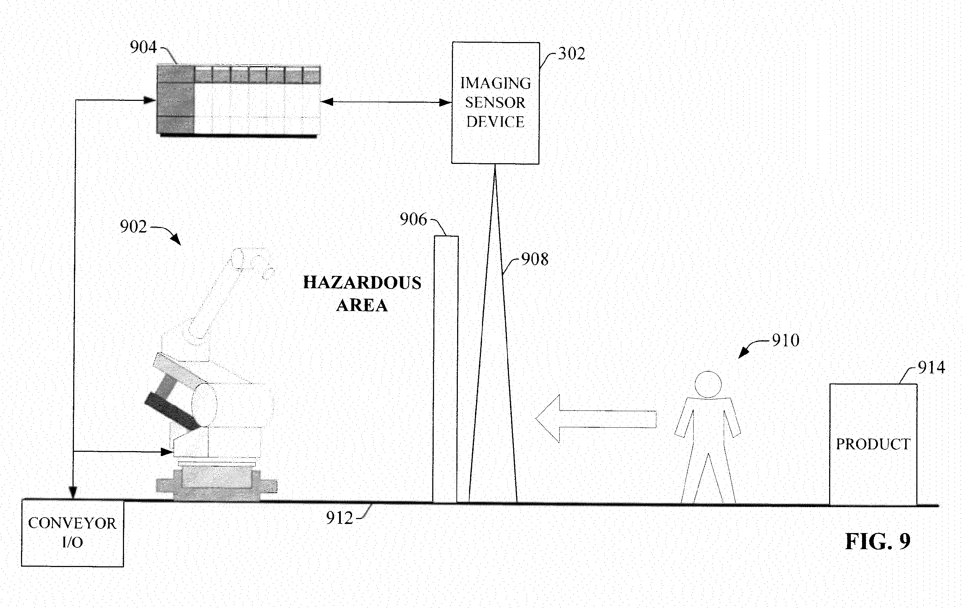

Embodiments of the imaging sensor device 302 that include sufficient safety components to meet or exceed a defined SIL or ASIL rating can be suitably implemented as components of a safety system (e.g., an industrial safety system, an on-board automotive safety system, etc.). For example, embodiments of the imaging sensor device described herein can be used in place of a light curtain to perform safety detection in industrial environments. Use of an imaging sensor device to perform safety monitoring can offer advantages over traditional light curtains or other presence sensing devices by supporting object identification and classification, human recognition, and other features not supported by conventional presence sensors. FIG. 9 is a schematic of an industrial safety monitoring system that utilizes imaging sensor device 302. In this example, a conveyor 912 transports products 914 into a protected machining or material handling area. Product 914 may comprise, for example, a manufactured part being conveyed through a series of automated machining processes, a pallet containing packaged products, or other such item. The machining or material handling area includes a robot 902 operating under the control and supervision of industrial controller 904, and thus constitutes a hazardous area that must be rendered safe before a human operator enters. The conveyor 912 transports the product 914 into the hazardous area via gateway 906 (e.g., an opening in a safety fence that surrounds the hazardous area).

Imaging sensor device 302 is mounted such that the light emitter and receiving lens face directly downward toward the conveyor. The light beam 908 is aimed toward the area directly in front of gateway 906. Using the technique described above, imaging sensor device 302 can identify and classify objects passing through light beam 908 as the objects approach gateway 906. Using this configuration, imaging sensor device 302 can simulate light curtain muting features, such that product 914 is permitted to pass through gateway 906 without halting operation of robot 902, but detection of a human operator approaching gateway 906 will cause the robot 902 to switch to a safe mode (e.g., halted or slowed).

To this end, the imaging sensor device 302 can identify and classify objects passing through light beam 908 using one or more techniques described above. For example, imaging sensor device 302 can be trained to identify product 914 as a first object class ("product"), and to identify human operator 910 as a second object class ("human"). When product 914 passes through light beam 908, imaging sensor device 302 can perform 2D analysis on the resulting image to identify the object, determine that the object belongs to the product classification, and allow the product 914 to proceed through gateway 906 to the hazardous area without disabling the robot 902 or conveyor 912. If an operator 910 standing on the conveyor 912 passes through light beam 908, the imaging sensor device 302 identifies the operator as belonging to the human classification and generates a control output placing the system in a safe mode. This may comprise, for example, sending a control output to industrial controller 904 instructing the controller to disable the robot 902 and to halt the conveyor 912.

To improve reliability of human detection while minimizing processing load and maintaining acceptable response times, imaging sensor device 302 can be configured to perform selective 3D analysis on a narrow strip through the middle of the image frame corresponding to the conveyor path, while performing faster 2D analysis on the remaining portions of the image frame. Performing depth

(distance) analysis on the areas corresponding to the conveyor path can assist the imaging sensor device 302 in accurately identifying the presence of a human on the conveyor, since object height can be used to distinguish between a valid product 914 and a human being or an improper object on the conveyor 912.

In an alternative configuration, the imaging sensor device 302 may be configured to perform 2D analysis over the entire pixel array of the image during normal operation until an object that does not conform to the "product" classification enters the viewing field. In response to detection of a non-product object entering the viewing field, the pixel array component 306 of the sensor can designate an area of the pixel array corresponding to the object for 3D analysis in order to obtain height information and profile over time for the new object, which can be used by the sensor to assist in determining whether the new object corresponds to the "human being" classification. The pixel array component 306 can dynamically move the portion of the image designated for 3D analysis to track with the object as it moves through the viewing field (e.g., based on object detection information provided by the image analysis component 312).

In another example of dynamic hazard analysis, the imaging sensor device 302 may be configured to adjust the size of the 3D analysis pixel area (e.g., the hazard zone) based on a current hazard level determined via 2D image analysis. For example, an area of the pixel array designated for 3D analysis may correspond to an area surrounding a hazardous area (e.g., a machine or traffic area). Based on 2D analysis of the pixel array, the imaging sensor device 302 may determine a speed of objects (e.g., machine components, mobile vehicles, objects on a conveyor, etc.) within the hazardous area. If the speed of objects is determined to exceed a threshold, implying a higher risk of injury, the portion of the pixel array for which 3D analysis is performed may be increased to a larger area surrounding the hazardous zone. When slower objects are detected within the hazardous zone (e.g., when the determined speed falls below the threshold), the risk level is assumed to be lessened, and the 3D analysis portion of the pixel array is made smaller to allow operators freedom to approach the hazardous area more closely.

The configuration depicted in FIG. 9 has a number of advantages over a light curtain solution. For example, light curtain transmitters and receivers are typically mounted vertically on either side of an entryway, exposing those components to possible damage by passing objects. Mounting the imaging sensor device 302 on the ceiling mitigates the risk of damage by placing the monitoring device outside the reach of passing objects. Moreover, light curtains are often muted to allow a product to pass through the entryway at particular defined durations during the operating cycle (that is, durations during which a product is expected to pass through the light curtain), and enabled during the remaining portions of the cycle. Since muting of the light curtain in such scenarios is a function of the particular portion of the operating cycle being executed, this method opens the possibility that a human may pass through the light curtain undetected during those times when the light curtain is muted. By contrast, since imaging sensor device 302 is able to classify detected objects as corresponding to a "human" classification and alter control based on this object classification, the imaging sensor device 302 is able to perform more direct and intelligent muting based on object detection and classification rather than being cycle-dependent.

The imaging sensor device 302 can also be used in other types of monitoring applications. For example, imaging sensor device 302 can be used to monitor access to particular areas of an industrial facility. In an example access monitoring application, an imaging sensor device 302 can be mounted on the ceiling above an entryway to an area to be monitored. Similar to the configuration illustrated in FIG. 9, the imaging sensor device 302 can be oriented to face downward to capture an image of the floor area outside the entryway to the monitored area. Since imaging sensor device 302 is able to accurately distinguish between humans and non-human objects, plant personnel can be tracked and counted as they enter and leave the monitored area. In an alternative configuration, the imaging sensor device 302 can be mounted above the entryway so that the sensor can additionally perform facial recognition and employee identification as part of the image analysis.

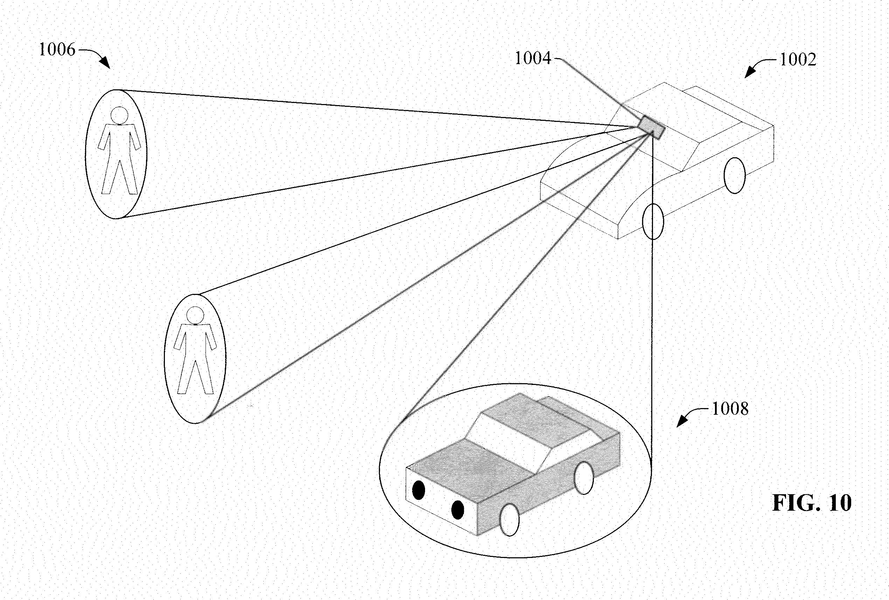

FIG. 10 illustrates an example automotive safety application of the imaging sensor device described herein. In this example, an imaging sensor device 1004 is mounted on a vehicle 1002 (e.g., on the rearview mirror, the bumper, the grill, etc.) and oriented to achieve a substantially horizontal viewing axis directed toward the front of the vehicle. In this example, the imaging sensor device 1004 is communicatively connected to the vehicle's engine control unit (ECU) over the car network and provides information or control outputs to the ECU based on hazard analysis performed by the hazard analysis and decision component 314 (based on image analysis performed by the distance determination component 310 and image analysis component). The safety component 316 also feeds data to the ECU based on internal sensor device fault monitoring and diagnostics. In particular, imaging sensor device 1004 performs pedestrian detection by obtaining image for a viewing area in front of the vehicle 1002 and applying the object detection and classification techniques described above to identify pedestrians 1006 near the vehicle 1002. The imaging sensor device 1004 is also trained to identify and classify other vehicles 1008 in the vicinity. Using the image analysis techniques described herein, the imaging sensor device can determine such factors as the position of the pedestrians 1006 and vehicles 1008, speed and acceleration of these detected objects relative to vehicle 1002, anticipated trajectories of the objects, etc. Based on this data, the imaging sensor device 1004 can output information and instructions to the ECU in response to identified risks (e.g., a potential collision with a pedestrian 1006 or vehicle 1008). For example, the imaging sensor device 1004 may instruct the ECU to activate the vehicle's braking system in response to a detected risk of collision with a pedestrian 1006 or vehicle 1008. In this regard, the imaging sensor device 1004 runs algorithms that detect, classify, and track objects; analyze a level of risk; and decide whether the braking system should be activated. The internal safety monitoring and diagnostic functions carried out by the safety component 316 can ensure that the imaging sensor device complies with appropriate safety standards for automobile on-board safety systems (e.g., ISO 26262).

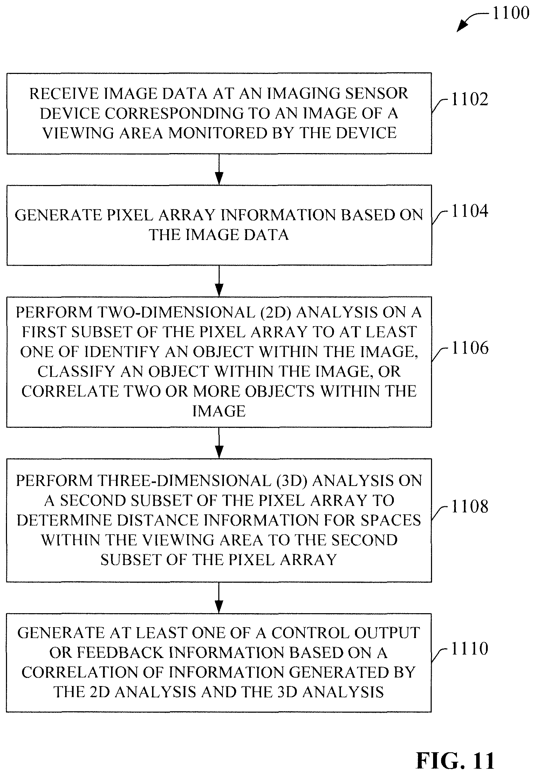

FIGs 11-12 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 11 illustrates an example methodology 1100 for performing selective three-dimensional analysis on a pixel array by an imaging sensor device. Initially, at 1102, image data is received at an imaging sensor device corresponding to an image of a viewing area monitored by the device. The image data can be obtained by emitting light illumination into the viewing area and measuring the reflected light received by each pixel of the imaging sensor device's photo-receiver array. At 1104, pixel array information is generated by the imaging sensor device based on the image data received at step 1102. The pixel array information can collectively comprise pixel data for an image frame collected by the imaging sensor device. At 1106, two-dimensional (2D) analysis is performed on a first subset of the pixel array to at least one of identify an object within the image, classify an object within the image, or correlate two or more objects identified in the image.

At 1108, three-dimensional (3D) analysis is performed on a second subset of the pixel array to determine distance information for spaces within the viewing area corresponding to the second subset of the pixel array. In some embodiments, the second subset of the pixel array on which 3D analysis is to be performed can be defined by a system designer prior to operation and recorded in a configuration profile, which can be read by a pixel array component of the imaging sensor device in order to group the first and second subsets of the pixel array for respective 2D and 3D analysis. Alternatively, the imaging sensor device can dynamically select the second subset of the pixel array for 3D analysis based on results of the 2D analysis performed at step 1106. For example, if the 2D analysis determines that an object of a certain classification has entered the viewing field, the imaging sensor device may define an area of the pixel array corresponding to the newly identified object and begin performing 3D analysis on the object in order to obtain spatial information for the object.

At 1110, at least one of a control output or feedback information is generated by the imaging sensor device based on correlation of information generated by the 2D analysis and the 3D analysis. For example, the imaging sensor device may correlate the 2D and 3D analysis results to yield an identity position, speed, acceleration, orientation, and/or trajectory for the object and generate a control or message output based on one or more of these measured factors. The control output may comprise, for example, an instruction to an industrial controller to transition a hazardous industrial machine to a safe mode, to lock an entry door to a hazardous area to prevent access, or other such control output.

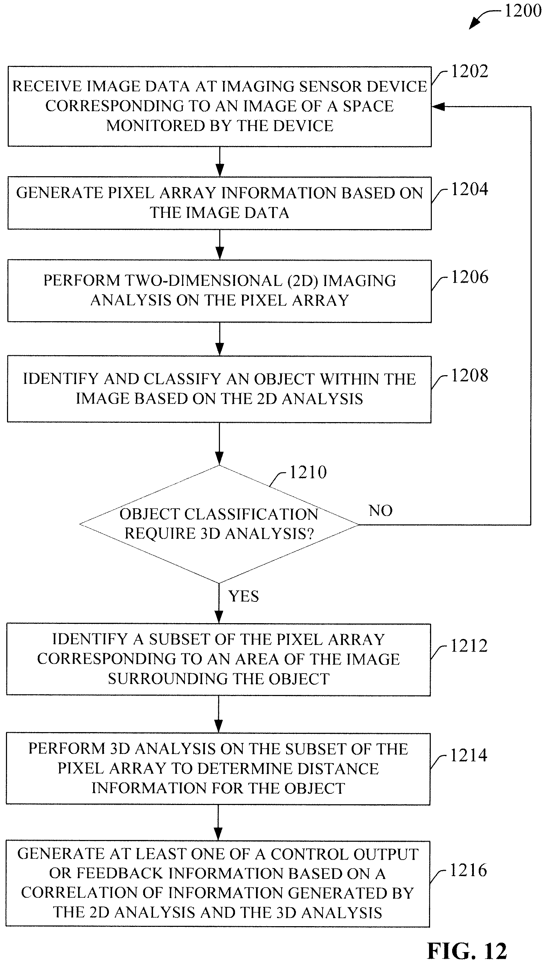

FIG. 12 illustrates an example methodology 1200 for dynamically selecting a portion of a pixel array for selective 3D analysis. Initially, at 1202, image data is received at an imaging sensor device corresponding to an image of a viewing area monitored by the device. At 1204, pixel array information is generated by the imaging sensor device based on the image data received at step 1202. At 1206, 2D imaging analysis is performed on the pixel array. At 1208, an object within the image is identified and classified based on the 2D imaging analysis.

At 1210, a determination is made regarding whether the classification of the object determined at step 1208 requires 3D (distance) analysis. For example, the sensor device may be trained to identify when a human has entered the viewing area. Accordingly, the sensor can determine that an object having a "human" classification has entered the viewing area based on the 2D analysis and object classification performed at steps 1206 and 1208.

If the object classification does not require 3D analysis, the methodology returns to step 1202 and continues monitoring received image data. Alternatively, if the object classification is determined to require 3D analysis, the methodology moves to step 1212, where a subset of the pixel array corresponding to an area of the image surrounding the object is identified. At 1214, 3D analysis is performed on the subset of the pixel array identified at step 1212 in order to determine distance information for the object. At 1216, at least one of a control output or feedback information is generated by the imaging sensor device based on correlation of information generated by the 2D analysis of step 1206 and the 3D analysis of step 1214. This may include, for example, identifying a potentially hazardous condition or risk based on correlation of the 2D and 3D results and sending an instruction to a separate controller (e.g., an industrial controller, a safety relay, a control computer of an automotive vehicle, etc.) that is communicatively connected to the imaging sensor to perform an action designed to mitigate the detected hazard. The action may comprise, for example, switching an industrial machine or system to a safe state (e.g., stopping the machine, switching the machine to a slow operation mode, returning the machine to the home position, etc.), instructing a vehicle's braking system to slow or stop the vehicle, or other such action.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers ofor mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

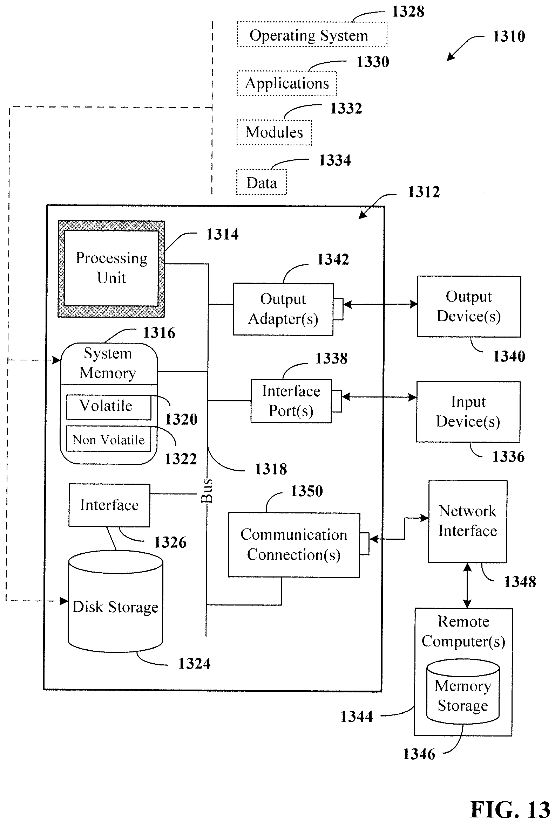

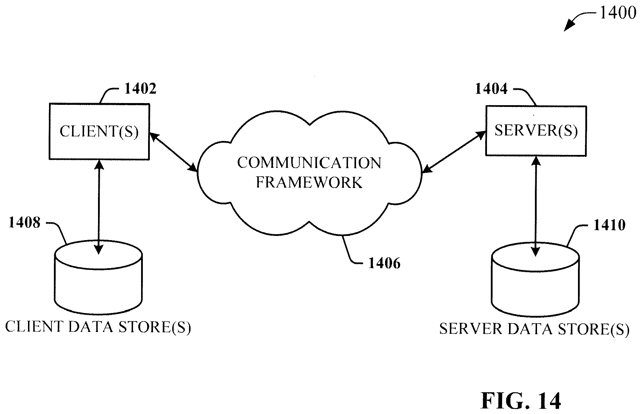

In order to provide a context for the various aspects of the disclosed subject matter, FIGs. 13 and 14 as well as the following discussion are intended to provide a brief, general description of a suitable environment in which the various aspects of the disclosed subject matter may be implemented.

With reference to FIG. 13, an example environment 1310 for implementing various aspects of the aforementioned subject matter includes a computer 1312. The computer 1312 includes a processing unit 1314, a system memory 1316, and a system bus 1318. The system bus 1318 couples system components including, but not limited to, the system memory 1316 to the processing unit 1314. The processing unit 1314 can be any of various available processors. Multi-core microprocessors and other multiprocessor architectures also can be employed as the processing unit 1314.

The system bus 1318 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1316 includes volatile memory 1320 and nonvolatile memory 1322. The basic input/output system (BIOS), containing the basic routines to transfer information between elements within the computer 1312, such as during start-up, is stored in nonvolatile memory 1322. By way of illustration, and not limitation, nonvolatile memory 1322 can include read only memory (ROM), programmable ROM (PROM), electrically programmable ROM (EPROM), electrically erasable PROM (EEPROM), or flash memory. Volatile memory 1320 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1312 also includes removable/non-removable, volatile/nonvolatile computer storage media. FIG. 13 illustrates, for example a disk storage 1324. Disk storage 1324 includes, but is not limited to, devices like a magnetic disk drive, floppy disk drive, tape drive, Jaz drive, Zip drive, LS-100 drive, flash memory card, or memory stick. In addition, disk storage 1324 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1324 to the system bus 1318, a removable or non-removable interface is typically used such as interface 1126.

It is to be appreciated that FIG. 13 describes software that acts as an intermediary between users and the basic computer resources described in suitable operating environment 1310. Such software includes an operating system 1328. Operating system 1328, which can be stored on disk storage 1324, acts to control and allocate resources of the computer 1312. System applications 1330 take advantage of the management of resources by operating system 1328 through program modules 1332 and program data 1334 stored either in system memory 1316 or on disk storage 1324. It is to be appreciated that one or more embodiments of the subject disclosure can be implemented with various operating systems or combinations of operating systems.

A user enters commands or information into the computer 1312 through input device(s) 1336. Input devices 1336 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1314 through the system bus 1318 *via* interface port(s) 1338. Interface port(s) 1338 include, for example, a serial port, a parallel port, a game port, and a universal serial bus (USB). Output device(s) 1340 use some of the same type of ports as input device(s) 1336. Thus, for example, a USB port may be used to provide input to computer 1312, and to output information from computer 1312 to an output device 1340. Output adapters 1342 are provided to illustrate that there are some output devices 1340 like monitors, speakers, and printers, among other output devices 1340, which require special adapters. The output adapters 1342 include, by way of illustration and not limitation, video and sound cards that provide a means of connection between the output device 1340 and the system bus 1318. It should be noted that other devices and/or systems of devices provide both input and output capabilities such as remote computer(s) 1344.

Computer 1312 can operate in a networked environment using logical connections to one or more remote computers, such as remote computer(s) 1344. The remote computer(s) 1344 can be a personal computer, a server, a router, a network PC, a workstation, a microprocessor based appliance, a peer device or other common network node and the like, and typically includes many or all of the elements described relative to computer 1312. For purposes of brevity, only a memory storage device 1346 is illustrated with remote computer(s) 1344. Remote computer(s) 1344 is logically connected to computer 1312 through a network interface 1348 and then physically connected *via* communication connection 1350. Network interface 1348 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1350 refers to the hardware/software employed to connect the network interface 1348 to the system bus 1318. While communication connection 1350 is shown for illustrative clarity inside computer 1312, it can also be external to computer 1312. The hardware/software necessary for connection to the network interface 1348 includes, for exemplary purposes only, internal and external technologies such as, modems including regular telephone grade modems, cable modems and DSL modems, ISDN adapters, and Ethernet cards.

FIG. 14 is a schematic block diagram of a sample computing environment 1400 with which the disclosed subject matter can interact. The sample computing environment 1400 includes one or more client(s) 1402. The client(s) 1402 can be hardware and/or software (e.g., threads, processes, computing devices). The sample computing environment 1400 also includes one or more server(s) 1404. The server(s) 1404 can also be hardware and/or software (e.g., threads, processes, computing devices). The servers 1404 can house threads to perform transformations by employing one or more embodiments as described herein, for example. One possible communication between a client 1402 and servers 1404 can be in the form of a data packet adapted to be transmitted between two or more computer processes. The sample computing environment 1400 includes a communication framework 1406 that can be employed to facilitate communications between the client(s) 1402 and the server(s) 1404. The client(s) 1402 are operably connected to one or more client data store(s) 1408 that can be employed to store information local to the client(s) 1402. Similarly, the server(s) 1404 are operably connected to one or more server data store(s) 1410 that can be employed to store information local to the servers 1404.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

## Claims

1. Use of an imaging sensor device (302) in place of a light curtain to perform safety detection in industrial environments, the imaging sensor device for detecting the presence of human beings within a potentially hazardous area, comprising:
a memory (320) that stores computer-executable components;
a processor (318), operatively coupled to the memory, that executes the computer-executable components, the computer-executable components comprising:
an illumination component (304) configured to emit a beam of light pulses to a viewing space monitored by the imaging sensor device;
a pixel array component (306) configured to, for a pixel array (406) of an image captured by the imaging sensor device, dynamically, based on object detection and classification group pixels of the pixel array to yield a subset of the pixels on which three-dimensional, 3D, analysis is to be performed;
an image analysis component (312) configured to perform (1106; 1206) 2D analysis (412; 704) on the entire pixel array of the image and determine a classification and a location of an object based on the 2D analysis, wherein a first result of the 2D analysis comprises object classification, x-y location of objects and correlation of pixel groups determined to belong to a common object;
a distance determination component (310) configured to perform (1108; 1214) 3D analysis (410; 702) on the subset of the pixels, wherein the 3D analysis comprises measurement of time-of-flight information and subsequent calculation of distance information (1214) for each pixel, yielding a 3D point cloud for the subset; and
a hazard analysis and decision component (314) configured to generate at least one of a control output or a message output (706) based on a result of correlating the first result (704) of the 2D analysis and a second result (702) of the 3D analysis, wherein the control output comprises an instruction to an industrial controller to transition an industrial machine to a safe state or to lock an entry door to an area to prevent access and wherein the message output comprises sending a feedback message to one or more plant personnel,
wherein the pixel array component is further configured to select the subset of the pixels based on the classification and the location of the object determined by the image analysis component, wherein the subset of the pixels comprises one of a single contiguous group of pixels or multiple non-contiguous groups of pixels,
wherein correlating the first result and the second result comprises correlating 2D imaging and 3D distance information to determine object location, velocity, and trajectory of the identified object within three-dimensional space according to the viewing space, and
wherein the imaging sensor device is mounted on a ceiling such that the illumination component and the receiving lens of the imaging sensor device face directly downward toward a conveyor.

2. The use of an imaging sensor device of claim 1, the imaging sensor device further comprising a waveform reconstruction component configured to, for a pixel of the second subset of the pixels, generate waveform data representing a reflected light pulse corresponding to the pixel, wherein the distance determination component is configured to generate the distance information based on the waveform data.

3. The use of an imaging sensor device of claim 1 or 2, the imaging sensor device further comprising a safety component (316) configured to monitor one or more internal components of the imaging sensor device a fault condition, and to generate a safety output in response to detection of the fault condition based on one or more safety algorithms.

4. The use of an imaging sensor device of one of claims 1 to 3, wherein the hazard analysis and decision component is further configured to generate correlated data (706) comprising at least one of three-dimensional location data, three-dimensional velocity data, three-dimensional acceleration data, or three-dimensional trajectory data for an object detected within the image based on the correlation between the first result and the second result, and to generate at least one of the control output or the message output based on the correlated data.

5. The use of an imaging sensor device of one of claims 1 to 4, wherein the hazard analysis and decision component is further configure to predict a future location of the object within the viewing space based on at least one of the three-dimensional location data, the three-dimensional velocity data, the three-dimensional acceleration data, or the three-dimensional trajectory data, and to generate at least one of the control output or the message output based on the future location.

6. The use of an imaging sensor device of any one of claims 1 to 5, wherein the pixel array component is further configured to identify the first subset of the pixels based on a configuration profile that defines one or more portions of the pixel array on which the 3D analysis is to be performed, and wherein the second subset of the pixels comprises one of a single contiguous group of pixels (602, 606) or multiple non-contiguous groups of pixels (604, 608).

## Patentansprüche

1. Verwendung einer Bildgebungssensorvorrichtung (302) anstelle eines Lichtvorhangs zur Ausführung einer Sicherheitserkennung in industriellen Umgebungen, wobei die Bildgebungssensorvorrichtung zum Erkennen der Anwesenheit von Menschen in einem potenziell gefährlichen Bereich umfasst, umfassend:
einen Speicher (320), der computerausführbare Komponenten speichert;
einen Prozessor (318), der operativ mit dem Speicher verbunden ist und die computerausführbaren Komponenten ausführt, wobei die computerausführbaren Komponenten umfassen:
eine Beleuchtungskomponente (304), die dazu eingerichtet ist, einen Strahl von Lichtimpulsen an einen Beobachtungsraum zu senden, der von der Bildgebungssensorvorrichtung überwacht wird;
eine Pixelanordnungskomponente (306), die dazu eingerichtet ist, für eine Pixelanordnung (406) eines durch die Bildgebungssensorvorrichtung aufgenommenen Bildes auf der Basis von Objekterfassung und Klassifizierung Pixel der Pixelanordnung dynamisch zu gruppieren, um eine Teilmenge von Pixeln zu ergeben, an der eine dreidimensionale Analyse auszuführen ist;
eine Bildanalysekomponente (312), die dazu eingerichtet ist, eine zweidimensionale Analyse (412; 704) der gesamten Pixelanordnung des Bildes auszuführen (1106; 1206) und auf der Grundlage der zweidimensionalen Analyse eine Klassifizierung und einen Ort eines Objekts zu bestimmen, wobei ein erstes Ergebnis der zweidimensionalen Analyse eine Objektklassifizierung, eine x-y-Ortsbestimmung von Objekten und eine Korrelation von Pixelgruppen umfasst, von denen bestimmt wird, dass sie zu einem gemeinsamen Objekt gehören;
eine Entfernungsbestimmungskomponente (310), die zum Ausführen (1108; 1214) der dreidimensionalen Analyse (410; 702) an der Teilmenge der Pixel eingerichtet ist, wobei die dreidimensionale Analyse die Messung von Flugzeitinformationen und die anschließende Berechnung von Entfernungsinformationen (1214) für jedes Pixel umfasst, wodurch sich eine dreidimensionale Punktwolke für die Teilmenge ergibt; und
eine Gefahrenanalyse- und Entscheidungskomponente (314), die dazu eingerichtet ist, eine Steuerausgabe und/oder eine Meldungsausgabe (706) auf der Grundlage eines Ergebnisses der Korrelation des ersten Ergebnisses (704) der zweidimensionalen Analyse und eines zweiten Ergebnisses (702) der dreidimensionalen Analyse zu erzeugen, wobei die Steuerausgabe eine Anweisung an eine industrielle Steuereinheit umfasst, eine Industriemaschine in einen sicheren Zustand zu überführen oder eine Eingangstür zu einem Bereich zu verriegeln, um den Zugang zu verhindern, und die Nachrichtenausgabe das Senden einer Rückmeldenachricht an ein oder zahlreiches Werkspersonal umfasst,
wobei die Pixelanordnungskomponente weiterhin dazu eingerichtet ist, die Teilmenge der Pixel auf der Grundlage der Klassifizierung und des durch die Bildanalysekomponente bestimmten Ortes des Objekts auszuwählen, wobei die Teilmenge der Pixel eine einzelne zusammenhängende Gruppe von Pixeln oder mehrere nicht zusammenhängende Gruppen von Pixeln umfasst,
wobei das Korrelieren des ersten Ergebnisses und des zweiten Ergebnisses das Korrelieren von zweidimensionalen Bildgebungs- und dreidimensionalen Entfernungsinformationen zum Bestimmen des Objektortes, der Geschwindigkeit und der Flugbahn des identifizierten Objekts innerhalb des dreidimensionalen Raums gemäß dem Betrachtungsraum umfasst, und
die Bildgebungssensorvorrichtung an einer Decke montiert ist, so dass die Beleuchtungskomponente und die Empfangslinse der Bildgebungssensorvorrichtung direkt nach unten in Richtung einer Beförderungseinrichtung zeigen.

2. Verwendung einer Bildgebungssensorvorrichtung nach Anspruch 1, bei der die Bildsensorvorrichtung weiterhin eine Wellenform-Rekonstruktionskomponente umfasst, die dazu eingerichtet ist, für ein Pixel der zweiten Teilmenge der Pixel Wellenformdaten zu erzeugen, die einen reflektierten Lichtimpuls darstellen, der dem Pixel entspricht, wobei die Entfernungsbestimmungskomponente dazu eingerichtet ist, die Entfernungsinformation basierend auf den Wellenformdaten zu erzeugen.

3. Verwendung einer Bildgebungssensorvorrichtung nach Anspruch 1 oder 2, bei der die Bildgebungssensorvorrichtung weiterhin eine Sicherheitskomponente (316) umfasst, die dazu eingerichtet ist, eine oder mehrere interne Komponenten der Bildgebungssensorvorrichtung auf einen Fehlerzustand zu überwachen und eine Sicherheitsausgabe als Reaktion auf das Erfassen des Fehlerzustands basierend auf einem oder mehreren Sicherheitsalgorithmen zu erzeugen.

4. Verwendung einer Bildgebungssensorvorrichtung nach einem der Ansprüche 1 bis 3, bei der die Gefahrenanalyse- und Entscheidungskomponente weiterhin dazu eingerichtet ist, korrelierte Daten (706) zu erzeugen, die dreidimensionale Ortsdaten und/oder dreidimensionale Geschwindigkeitsdaten und/oder dreidimensionale Beschleunigungsdaten und/oder dreidimensionale Bewegungsbahndaten für ein Objekt umfassen, das auf der Grundlage der Korrelation zwischen dem ersten Ergebnis und dem zweiten Ergebnis innerhalb des Bildes erfasst wird, und eine Steuerausgabe und/oder Nachrichtenausgabe basierend auf den korrelierten Daten zu erzeugen.

5. Verwendung einer bildgebenden Sensorvorrichtung nach einem der Ansprüche 1 bis 4, bei der die Gefahrenanalyse- und Entscheidungskomponente weiterhin dazu eingerichtet ist, einen zukünftigen Ort des Objektes innerhalb des Beobachtungsraums basierend auf den dreidimensionalen Ortsdaten und/oder den dreidimensionalen Geschwindigkeitsdaten und/oder den dreidimensionalen Beschleunigungsdaten und/oder den dreidimensionalen Bewegungsbahndaten vorherzusagen, und die Steuerausgabe und/oder die Nachrichtenausgabe basierend auf dem zukünftigen Standort zu erzeugen.

6. Verwendung einer Bildgebungssensorvorrichtung nach einem der Ansprüche 1 bis 5, bei der die Pixelanordnungskomponente weiterhin dazu eingerichtet ist, die erste Teilmenge der Pixel auf der Grundlage eines Konfigurationsprofils zu identifizieren, das ein oder mehrere Abschnitte der Pixelanordnung definiert, an der die dreidimensionale Analyse ausgeführt werden soll, und die zweite Teilmenge der Pixel eine einzelne zusammenhängende Gruppe von Pixeln (602, 606) oder mehrere nicht zusammenhängende Pixelgruppen (604, 608) umfasst.

## Revendications

1. Dispositif détecteur d'imagerie (302) remplaçant un rideau de lumière pour effectuer une détection de sécurité dans des environnements industriels, le dispositif détecteur d'imagerie permettant de détecter la présence d'êtres humains au sein d'une zone potentiellement dangereuse, comprenant :
une mémoire (320) qui stocke des composants exécutables par ordinateur ;
un processeur (318), couplé de manière fonctionnelle à la mémoire, qui exécute les composants exécutables par ordinateur, les composants exécutables par ordinateur comprenant :
un composant d'éclairage (304) conçu pour émettre un faisceau d'impulsions lumineuses vers un espace d'observation surveillé par le dispositif détecteur d'imagerie ;
un composant de matrice de pixels (306) conçu pour, concernant une matrice de pixels (406) d'une image capturée par le dispositif détecteur d'imagerie, regrouper dynamiquement, sur la base de la détection et de la classification d'un objet, des pixels de la matrice de pixels pour produire un sous-ensemble des pixels devant être soumis à une analyse tridimensionnelle, 3D ;
un composant d'analyse d'image (312) conçu pour effectuer (1106; 1206) une analyse bidimensionnelle, 2D, (412; 704) de la totalité de la matrice de pixels de l'image et pour déterminer une classification et une localisation d'un objet sur la base de l'analyse 2D, dans lequel un premier résultat de l'analyse 2D comprend une classification de l'objet, une localisation x-y d'objets et une corrélation de groupes de pixels déterminés comme appartenant à un objet commun ;
un composant de détermination de distance (310) conçu pour effectuer (1108; 1214) une analyse 3D (410; 702) sur le sous-ensemble des pixels, dans lequel l'analyse 3D comprend une mesure d'informations de temps de vol, suivie d'un calcul d'informations de distance (1214) pour chaque pixel, produisant un nuage de points 3D pour le sous-ensemble ; et
un composant d'analyse de danger et de décision (314) conçu pour générer au moins une sortie de commande et/ou une sortie de message (706) en fonction d'un résultat de corrélation du premier résultat (704) de l'analyse 2D et d'un second résultat (702) de l'analyse 3D, dans lequel la sortie de commande comprend une instruction donnée à un contrôleur industriel pour faire passer une machine industrielle en état de sûreté ou pour verrouiller une porte d'entrée menant à une zone afin d'en empêcher l'accès, et dans lequel la sortie de message comprend l'envoi d'un message en retour à un membre ou plusieurs membres du personnel de l'installation industrielle,
dans lequel le composant de matrice de pixels est conçu, en outre, pour sélectionner le sous-ensemble des pixels sur la base de la classification et de la localisation de l'objet déterminées par le composant d'analyse d'image, dans lequel le sous-ensemble des pixels comprend un seul groupe contigu de pixels ou de multiples groupes non contigus de pixels,
dans lequel la corrélation du premier résultat et du second résultat comprend la corrélation d'une imagerie 2D et d'informations de distance 3D pour déterminer la localisation d'un objet, la vitesse et la trajectoire de l'objet identifié au sein de l'espace tridimensionnel en fonction de l'espace d'observation, et
dans lequel le dispositif détecteur d'imagerie est monté sur un plafond, de façon que le composant d'éclairage et la lentille réceptrice du dispositif détecteur d'imagerie soient dirigés directement vers le bas face à une installation de transport.

2. Utilisation d'un dispositif détecteur d'imagerie selon la revendication 1, le dispositif détecteur d'imagerie comprenant, en outre, un composant de reconstruction de forme d'onde conçu pour générer, pour un pixel du second sous-ensemble des pixels, des données de forme d'onde représentant une impulsion lumineuse réfléchie correspondant au pixel, dans lequel le composant de détermination de distance est conçu pour générer les informations de distance sur la base des données de forme d'onde.

3. Utilisation d'un dispositif détecteur d'imagerie selon la revendication 1 ou 2, le dispositif détecteur d'imagerie comprenant, en outre, un composant de sécurité (316) conçu pour surveiller un ou des composants internes du dispositif détecteur d'imagerie pour détecter une défaillance, et pour générer une sortie de sécurité en réponse à la détection de la défaillance sur la base d'un ou de plusieurs algorithmes de sécurité.

4. Utilisation d'un dispositif détecteur d'imagerie selon l'une des revendications 1 à 3, dans lequel le composant d'analyse de danger et de décision est conçu, en outre, pour générer des données corrélées (706) comprenant au moins des données de localisation tridimensionnelle et/ou des données de vitesse tridimensionnelle et/ou des données d'accélération tridimensionnelle et/ou des données de trajectoire tridimensionnelle pour un objet détecté à l'intérieur de l'image sur la base de la corrélation entre le premier résultat et le second résultat, et pour générer au moins la sortie de commande et/ou la sortie de message sur la base des données corrélées.

5. Utilisation d'un dispositif détecteur d'imagerie selon l'une des revendications 1 à 4, dans lequel le composant d'analyse de danger et de décision est conçu, en outre, pour prédire une localisation future de l'objet à l'intérieur de l'espace d'observation sur la base d'au moins les données de localisation tridimensionnelle et/ou les données de vitesse tridimensionnelle et/ou les données d'accélération tridimensionnelle et/ou les données de trajectoire tridimensionnelle, et pour générer au moins la sortie de commande et/ou la sortie de message sur la base de la localisation future.

6. Utilisation d'un dispositif détecteur d'imagerie selon l'une quelconque des revendications 1 à 5, dans lequel le composant de matrice de pixels est conçu, en outre, pour identifier le premier sous-ensemble des pixels sur la base d'un profil de configuration qui définit une ou plusieurs portions de la matrice de pixels qui doivent être soumises à l'analyse 3D, et dans lequel le second sous-ensemble des pixels comprend un seul groupe contigu de pixels (602, 606) ou de multiples groupes non contigus de pixels (604, 608).
